# EUROPÄISCHE PATENTSCHRIFT

(11) **EP 0 647 519 B1**
(45) Veröffentlichungstag und Bekanntmachung des Hinweises auf die Patenterteilung: **17.11.1999**
(21) Anmeldenummer: 94115327.2
(22) Anmeldetag: 29.09.1994
(51) Int. Cl.: B29C 70/46, B29C 43/56

(54) **Geruchsarmer schall- und wärmedämmender Formkörper sowie Verfahren zu dessen Herstellung**
Low odour moulded article for sound and heat insulation and process for its manufacturing
Article moulé peu odorant pour isolation acoustique et thermique et procédé pour sa fabrication

(30) Priorität: 06.10.1993 CH 300793
(43) Veröffentlichungstag der Anmeldung: 12.04.1995
(73) Patentinhaber: RIETER AUTOMOTIVE (INTERNATIONAL) AG, CH-8700 Küsnacht (CH)
(72) Erfinder: Haeseker, Willy, D-36172 Bebra (DE); Freyer, Harald, D-36199 Rotenburg a.d.Fulda (DE)
(74) Vertreter: Ritscher, Thomas, Dr.

(56) Entgegenhaltungen:
- EP-A- 0 476 538
- EP-A- 0 484 778
- EP-A- 0 583 671
- WO-A-93/20131
- DE-A- 3 841 560
- DE-A- 3 940 824
- DE-A- 4 207 243
- US-A- 4 410 385
- US-A- 5 108 691
- DATABASE WPI Week 9003, Derwent Publications Ltd., London, GB; AN 90-018780 & JP-A-1 298 261 (SEKISUI CHEM.) 1. Dezember 1989

## Beschreibung

Die vorliegende Erfindung betrifft einen porösen, schallund/oder wärmedämmenden Formkörper mit flauschiger Oberfläche, und ein Verfahren zu dessen Herstellung.

Solche Formkörper finden ihre Verwendung vorzugsweise in der Automobilindustrie, wo sie als Isoliermatten auf dem Karosserieboden, an der Stirnwand oder im Motor- resp. im Kofferraum befestigt werden. Für den passgenauen Einbau sind diese Formkörper den jeweiligen Konturen entsprechend geformt. Je nach ihrer Verwendung können sie mit einem stoffartigen Dekor resp. einer schmutzabweisenden Schutzschicht versehen sein.

Dabei tritt heutzutage neben den technischen Eigenschaften wie akustisch wirksame Isolierfähigkeit und den ästhetischen Aspekten vor allem die gesundheitliche Verträglichkeit der verwendeten Formkörper in den Vordergrund. Es ist bekannt, dass durch das Freisetzen von Substanzen nicht nur unangenehme Gerüche entstehen, sondern auch Übelkeit und allergische Reaktionen ausgelöst werden können. Speziell gilt dies bei mit Phenolharz verfestigten Vliessstoffen.

Im allgemeinen werden solche Formkörper durch Heisspressen in geeigneten Formpressen hergestellt. Dabei wird ein sog. Halbfabrikat d.h. ein Faservlies aus Natur- und/oder Kunstfasern, mit pulverförmig vorliegenden Bindemitteln, insb. Phenolharz z.B. Novolak, welches bei entsprechend erhöhter Temperatur thermisch polymerisiert, in der beheizbaren Formpresse in die gewünschte Form gebracht.

Ein konventionelles Verfahren zur Herstellung von Formkörpern aus Faservliesen wird z.B. in der US-A-4 327 049 beschrieben. Das Vlies bestehend aus einem Laminat aus thermoplastischem Material, z.B. aus Polystyrol oder Polyurethan-Schaum, wird in einer heizbaren Formpresse bis zum Erweichen aufgeheizt und anschliessend verpresst. Dabei ist es, insbesondere bei Formteilen von mehr als 80 mm Dicke, schwierig eine homogene Hitzeverteilung über das gesamte Faservlies zu erreichen und damit ein Formteil mit überall gleichen physikalischen, insbesonders akustisch isolierenden Eigenschaften zu erhalten. Darüberhinaus vergrössert sich bei erhöhten Presstemperaturen das Risiko der Zersetzung der verwendeten Substanzen und damit natürlich die Freisetzung unerwünschter Zersetzungsprodukte.

Um den Nachteil der schlechten Durchwärmung zu vermeiden, wird in der US-A-5 108 691 ein sog. HCTM (High Caloric Transfer Medium) Prozess vorgeschlagen, bei dem die Faservliese z.B. harzverbundene Glasfasern - zusätzlich zur Wärmebehandlung in der Formpresse - noch mit überhitztem Dampf durchströmt werden. Dieser Dampf von geeigneter Temperatur durchdringt das Vlies und ermöglicht damit die Erhöhung der Verform-Temperatur im Innern des Pressvolumens.

Es hat sich jedoch gezeigt, dass dieses Verfahren nur bei Verwendung von Halbfabrikaten mit gleicher Dichte an allen Stellen gut funktioniert. Teile mit unterschiedlicher Dichte werden hingegen unterschiedlich gut durchströmt, so dass es vorkommen kann, dass manche Stellen bereits ausgehärtet sind, andere jedoch noch einen hohen Anteil an nicht-polymerisiertem Material aufweisen. Dadurch besteht natürlich wieder die Gefahr des Freisetzens von gesundheitsgefährdenden Substanzen, wie z.B. Formaldehyd oder Ammoniak.

Man hat auch schon versucht (vgl. US-A-4 623 499) ein für die Polymerisationsreaktion katalytisch wirksames Reaktionsgas durch die geschlossene Pressform strömen zu lassen. Es hat sich jedoch gezeigt, dass auch mit dieser Durchströmtechnik keine geruchsfreien Formkörper hergestellt werden können. Insbesondere scheinen sich auch hier im Formkörper gut und schlecht durchströmte Bereiche auszubilden. Ebenso scheinen verschieden stark verpresste Bereiche oder Bereiche mit erhöhtem Wassergehalt zu lokal stark differierenden Reaktionsauslösezeiten zu führen. Jedenfalls können damit Formkörper mit einer Dicke oberhalb 30 mm nicht befriedigend ausgehärtet werden und weisen an den Eintrittsstellen des Durchströmmediums Verbrennungserscheinungen auf.

Ein weiterer wesentlicher Nachteil der oben geschilderten Verfahren besteht darin, dass das im Halbfabrikat pulverförmig vorliegende Bindemittel durch das durchströmende Medium wegtransportiert wird und deshalb zu lokalen Inhomogenitäten der Bindemittelverteilung führt. Ausserdem kondensieren diese derart weggeblasenen Harze in der Regel an den Austrittsöffnungen der Pressform und bedingen eine aufwendige manuelle Wartung/Reinigung derselben. Als besonders problematisch erweisen sich jedoch die unerwünscht hohen Mengen an toxischen Substanzen (Formaldehyd, Ammoniak; Phenol etc.), welche durch die unvollständige Vernetzung der Bindemittel frei werden. Kritisch sind offensichtlich jene Bereiche in denen eine zuwenig wirksame Erwärmung bewerkstelligt wurde, so dass das Harz wohl Ammoniak und Formaldehyd freigesetzt hat, jedoch das Harz aufgrund einer zu niedrigen Temperatur nicht in der Lage ist sich mit dem Formaldehyd zu vernetzen.
Ausserdem unterliegen die Bereiche mit ungenügend vernetztem Bindemittel einer raschen Zersetzung, bilden als sekundäre Effekte den bereits erwähnten unangenehmen Geruch und sind potentielle Fäulnis- und Schimmelherde.

Aus obigem ist offensichtlich, dass ein Bedürfnis besteht, Formkörper zu schaffen, welche ein geringes Emissionspotential an toxischen Substanzen und unangenehmen Gerüchen aufweisen.

Denkbare Lösungsansätze liegen etwa in der Verlängerung der Prozesszeit und/oder der Erhöhung der Prozesstemperatur. In diesem Zusammenhang ist zu bedenken, dass die maximal zulässige Temperatur, um eine Karbonisierung der Naturfasern zu vermeiden, um 180°C liegt. Deshalb wurde bis anhin der Bindemittelanteil derart bemessen, dass auch in den sich nur schlecht vernetzenden Bereichen des Formkörpers eine genügende Stabilität erzielt wird. Die relativ hohen Anteile an unvernetzten Bindemitteln resp. Spaltprodukten wird dabei zu Gunsten der erforderlichen Festigkeit in Kauf genommen.

In der EP 0 484 778 wird ein Verfahren beschrieben, indem zur Herstellung von sandwich-artigen Formteilen und Platten, Fasermischungen mit voneinander abweichenden thermischen Eigenschaften unter Druck, Wärme und feuchter Heissluft verpresst werden. Die derart gebildeten Formteile weisen ein niedriges Raumgewicht mit gleichmässig verfestigten Deckseiten auf. Somit entstehen also Formteile, welche eine hohe Steifigkeit resp. selbsttragende dimensionsstabile Eigenschaften und damit eine hohe Formstabilität besitzen.

Es ist deshalb die Aufgabe der vorliegenden Erfindung, einen Formkörper zu schaffen, welcher die Nachteile der bekannten Formkörper nicht aufweist und insbesondere ein geringes Emissionspotential an toxischen Substanzen und unangenehmen Gerüchen aufweist. Darüberhinaus soll ein akustisch wirksamer Formkörper geschaffen werden, welcher von geringer Dichte ist und eine flauschige Oberfläche aufweist.

Es ist auch die Aufgabe der vorliegenden Erfindung, ein Verfahren zur Herstellung eines erfindungsgemässen Formkörpers zu schaffen, mit welchem die Verbindung von thermoplastischen Fasern mit den Fasern des Vlieses an allen Orten und unabhängig von der spezifischen Formgebung und dem Feuchtigkeitsgehalt möglichst gleichzeitig ausgelöst wird und gleich schnellerfolgt.

Erfindungsgemäss wird die gestellte Aufgabe durch ein Verfahren mit den Merkmalen des Anspruchs 1 gelöst, wodurch ein Formkörper geschaffen wird, dessen Bindemittel in allen Bereichen des porösen Formkörpers gleichmässig vernetzt ist und zwar unter Verwendung von thermoplastischen Fasern als Bindemittel. Insbesondere wird dadurch ein Formkörper geschaffen, welcher durch den Ersatz herkömmlicher Harze durch thermoplastische Fasern als Bindemittel, im Wesentlichen eine Formaldehydemission von weniger als 2 ppm aufweist.
Bei allen bis anhin hergestellten Produkten zeigt sich nämlich, das keine gleichförmige Durchpolymerisation resp. Vernetzung vorliegt und der Formkörper, je nach Verformungsgrad und Dicke stellenweise verbrannte und/oder gar nicht vernetzte Bereiche aufweist.

Beim Verfahren zur Herstellung des erfindungsgemässen Formkörpers aus thermoplastischen Bindefasern und Vliesfasern wird ein aus mindestens einer Schicht bestehendes Halbfabrikat in eine offene heiz- und kühlbare Formpresse eingelegt, beim Schliessen der Formpresse druckdicht abgeschlossen und bei Bedarf verdichtet. Durch Einleiten eines energiereichen Druckgases, vorzugsweise Wasserdampf, in das Formnest werden für die Verbindung der verschiedenen Fasern ideale Temperatur- und Feuchtigkeitsbedingungen in allen Bereichen des Formkörpers gleichzeitig bewerkstelligt. Dieses Druckgas erzeugt im Formnest einen Innendruck von mehreren bar, welcher solange aufrecht erhalten wird, bis die eingebrachten thermoplastischen Fasern mit den Vliesfasern vernetzt sind. Im Unterschied zu konventionellen Verfahren wird also keine Fluidströmung erzeugt, sondern bleiben die Druckverhältnisse während der Herstellung stabil. Durch die Verwendung von thermoplastischen Fasern anstelle der üblichen Phenol-Novolak Pulverharze reduziert sich der Anteil an gasförmigen und toxischen Spaltprodukten während der Aushärtzeit auf ein Minimum und eine Emission von Formaldehyd, Ammoniak oder Phenolen ist bei derartig hergestellten Formkörpern nicht zu befürchten. Weiterhin können durch die Verwendung von thermoplastischen Fasern unterschiedlicher Länge bzw. unterschiedlichen Gehaltes die mechanischen Eigenschaften der Formkörper in einem weiten Bereich variiert werden. Die Herstellung der Formkörper unter statischen Druckbedingungen ist auch gegenüber den herkömmlichen Durchströmverfahren energie- und kostensparend.

Eine zur Durchführung des Verfahrens geeignete heizbare Pressform weist ein erstes Pressformteil mit Dampfzuführleitungen auf. Ein zweites Pressformteil ist dampfsperrend und schliesst druckdicht mit dem ersten Formteil.

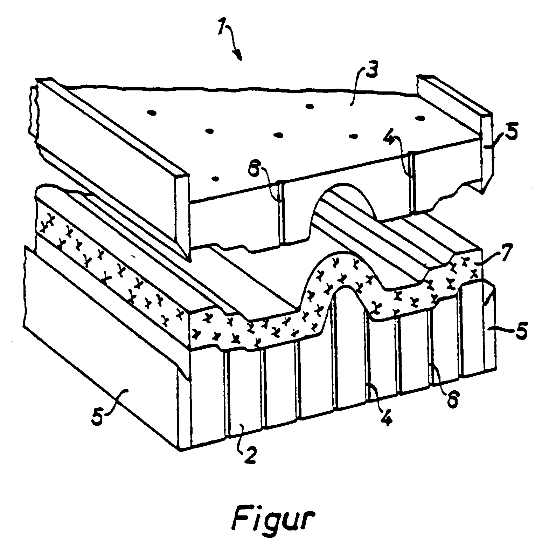

Nachfolgend soll ein Ausführungsbeispiel des erfindungsgemässen Formkörpers und das erfindungsqemässe Verfahren zur Herstellung desselben mit Hilfe der Figur beschrieben werden. Es zeigt:

Einzige Figur: einen in einer geeigneten Pressform ausgeformten erfindungsgemässen Formkörper.

Diese Figur zeigt eine Pressform 1, die aus einer unteren Formhälfte 2 und einer oberen Formhälfte 3 besteht, wobei diese Formhälften mit üblichen hier nicht näher dargestellten Mitteln aufgeheizt werden. Diese beiden Formhälften bilden zusammen ein Formnest, in welchem das Halbfabrikat gepresst und ausgehärtet wird. Ein erfindungsgemässes Halbfabrikat besteht aus einem Faservlies aus vorwiegend natürlichen Fasern, z.B. Reissfasergut aus Baumwolle mit anderen Füllstoffen in kleineren Mengen und ist mit thermoplastischen Fasern versetzt. In dem dargestellten Ausführungsbeispiel weisen die beiden Formhälften eine Vielzahl von feinen Kanälen 4 auf, durch welche das heisse Fluid in das Formnest eingeleitet wird. Die dargestellte Pressform weist an ihren Rändern Schneid- und Dichtungselemente 5 auf, welche unabhängig bewegt und verschoben werden können, und die geschlossene Form 1 perimetral druckdicht abschliessen, z.B. durch einen Labyrinth-Verschluss. Nach dem druckdichten Schliessen der Pressform 1 wird das Halbfabrikat dem heissen Fluid ausgesetzt. Vorteilhafterweise wird als Fluid gesättigter, trockener Wasserdampf verwendet. Dieses Fluid weist einen statischen Druck von 2 - 20 bar, üblicherweise einen solchen von 10 bar auf, und verweilt während der gewünschten Aushärtezeit unter diesem Druck im Formnest. Die übliche Verweilzeit in der Formpresse beträgt bis 60 Sekunden. Verweilzeit, Druck und Temperatur richten sich dabei nach den gewünschten mechanischen Eigenschaften der Formkörper. Auf diese Weise können gleichmässig vernetzte Formkörper von über 80 mm Dicke hergestellt werden. Vor dem Öffnen der Pressform wird das Druckmedium bspw. über absperrbare Kanäle 6 abgelassen. Es versteht sich, dass diese verunreinigten Restgase einer geeigneten Reinigungsvorrichtung zugeführt werden.

Geeignete thermoplastische Fasern bestehen vorzugsweise aus Polypropylen und haben eine Länge von ca. 4 cm. Darüberhinaus können aber auch dem Fachmann bekannnte thermoplastische Copolymere oder sog. Bicomponent-Fasern verwendet werden. Letztere sind Fasern die aus zwei, unterschiedliche Eigenschaften aufweisenden, thermoplastischen Materialien aufgebaut sind. So kann z.B. der Kern der Faser aus einem ersten thermoplastischen Material bestehen, das von einem zweiten thermoplastischen Material umhüllt oder überzogen ist, derart, dass der Schmelzpunkt des zweiten Materials tiefer liegt als derjenige des Kernmaterials. Solche Bicomponent-Fasern eignen sich besonders für das erfindungsgemäß Verfahren, bei den es darauf ankommt, daß die Fasern im Wesentlichen bestehen bleiben, also nicht vollständig schmelzen.

Ebenso ist denkbar, die beiden Längshälften der Faser aus verschiedenen thermoplastischen Materialien zu bilden.

Der Anteil der thermoplastischen faser förmigen Komponente am Gesamtmaterial sollte für den vorliegenden Verwendungszweck nicht wesentlich unter 20 Gew.-% liegen, da sonst nur wenige Übergänge zwischen thermoplastischen Fasern und Vliesfasern vorhanden sind und nur an diesen wenigen Stellen eine Verbindung zwischen den Fasern möglich ist und folgedessen die gewünschte Steifigkeit und Festigkeit nicht mehr erreicht werden kann.

Es hat sich gezeigt, dass bei den erfindungsgemässen Formkörpern im Vergleich zu herkömmlichen Formkörper mit Phenolharzen als Bindemittel, ein wesentlich geringerer Anteil an thermoplastischen Fasern benötigt wird, um die gleiche Festigkeit zu erreichen. Darüberhinaus weisen diese Formkörper mit thermoplastischen Fasern eine geringere Dichte auf, was sich wiederum positiv auf ihre Eignung als akustisch isolierende Teile auswirkt. Akustisch sinnvolle Dichten liegen etwa im Bereich von 50 - 200 g/cm³, wobei die nach den bisher bekannten Verfahren hergestellten Formteile eine Dichte von mehr als 300 g/cm³ aufweisen. Diese dienen dann üblicherweise als Träger für weitere Elemente, sind jedoch nicht als akustisch wirksame Teile verwendbar.

Das beschriebene Herstellungsverfahren unter stationären Dampfdruckbedingungen eignet sich auch in Kombination mit pulverförmigen Thermoplasten, da damit die für das Erreichen des Schmelz- bzw. Erweichungspunktes des thermoplastischen Materials nötige Temperatur, schnell und exakt einstellbar ist. Mit diesem Verfahren lassen sich Formteile mit flauschiger Oberfläche herstellen, welche darüberhinaus gute akustische Eigenschaften besitzen.

Es ist auch denkbar, eine Kombination von thermoplastischen Fasern mit herkömmlichen Harz-Bindemitteln einzusetzen. Dies lässt sich z.B. bei der Herstellung von flauschigen Produkten anwenden, die aufgrund ihrer nur wenig verschmolzenen Fasern oftmals eine schlechte Eigenfestigkeit aufweisen. Die Kombination von duroplastischem mit thermoplastichem Bindemittel führt dann zu Formteilen mit flauschiger Oberfläche und ausreichender Steifigkeit, wobei die Formteile dann trotz der verwendeten Pulverharze nur geringe Emissionen an toxischen Spaltprodukten zeigen. Die bei der Herstellung erzeugten gasförmigen Spaltprodukte können ja nicht aus der druckdicht verschlossenen Pressform entweichen und nehmen daher während der gesamten Vernetzung an der Polymerisation teil. Dadurch reduziert sich wiederum der für die Polymerisation benötigte Harzanteil, was die schädlichen Emissionen nochmals senkt.

## Patentansprüche

1. Verfahren zur Herstellung eines porösen, schall- und wärmedämmenden Formkörpers mit flauschiger Oberfläche und einer Dichte von 50 - 200 g/cm³, inbesondere zum Auskleiden von schall- und/oder wärmeabstrahlender Fahrzeugteile, bei welchem in den Hohlraum einer heizbaren Pressform ein Faservlies aus natürlichen Fasern und thermoplastische Fasern enthaltendem Bindemittel eingelegt wird, wobei der Bindemittelanteil mindestens 15 Gew.-%, vorzugsweise 20 Gew.-% beträgt und die thermoplastischen Fasern so gewählt werden, dass diese bei der Verarbeitung im Wesentlichen bestehen bleiben, also nicht vollständig schmelzen, diese Pressform gas- und druckdicht geschlossen wird, ein heisses Fluid in den das Faservlies mit dem Bindemittel enthaltenden Hohlraum eingelassen und dieses unter einem erhöhten Druck von 2 bis 20 bar während der gesamten Verweilzeit von Faservlies und Bindemittel in der Pressform gehalten wird, und vor der Entnahme des erzeugten Formkörpers aus der geöffneten Pressform das Fluid aus der Pressform abgelassen und einer Filteranlage zugeführt wird.

2. Verfahren nach Anspruch 1 dadurch gekennzeichnet, dass als Fluid gesättigter, trockener Wasserdampf verwendet wird.

3. Poröser, schall- und/oder wärmedämmend wirkender Formkörper, hergestellt nach dem Verfahren gemäss Anspruch 1.

4. Formkörper nach Anspruch 3 dadurch gekennzeichnet, dass dieser ein Einschichtprodukt ist.

5. Formkörper nach einem der Ansprüche 3 und 4 dadurch gekennzeichnet, dass mindestens eine Dekor- oder Schutzschicht auf diesen Formkörper aufgebracht ist.

6. Formkörper nach einem der Ansprüche 3 bis 5 dadurch gekennzeichnet, dass als Bindemittel eine Mischung aus thermoplastischem und duroplastischem Material vorhanden ist.

7. Formkörper nach einem der Ansprüche 3 bis 6, dadurch gekennzeichnet, dass die thermoplastischen Fasern aus Polypropylen, Copolymeren und/oder Bicomponent Fasern bestehen.

8. Formkörper nach Anspruch 7, dadurch gekennzeichnet, dass die thermoplastischen Fasern eine Länge von ca. 4 cm haben.

## Claims

1. A method for manufacturing a porous, sound and heat insulating moulded article with a fleecy surface and a density of 50 - 200 g/cm², in particular for covering sound and/or heat radiating vehicle parts, in which into the cavity of a heatable press mould there is applied a fibre fleece of natural fibres and binder containing thermoplastic fibres, wherein the binder constituent part is at least 15 % by weight, preferably is 20 % by weight and the thermoplastic fibres are selected such that these essentially remain intact with the processing, thus do not completely melt, this press mould is closed in a gas-tight and pressure-tight manner, a hot fluid is admitted into the cavity containing the fibre fleece with the binder and this is kept under an increased pressure of 2 to 20 bar during the complete retention time of the fibre fleece and binder in the press mould, and before the removal of the produced moulded article from the opened press mould the fluid is evacuated from the press mould and led to a filter installation.

2. A method according to claim 1, characterised in that as water a saturated, dry water steam is used.

3. A porous moulded article acting in a sound and/or heat insulating manner, manufactured according to the method according to claim 1.

4. A moulded article according to claim 3, characterised in that this is a one-layer product.

5. A moulded article according to one of claims 3 and 4, characterised in that at least one decor layer or protective layer is deposited onto this moulded article.

6. A moulded article according to one of the claims 3 to 5, characterised in that as a binder a mixture of thermoplastic and duroplastic material is present.

7. A moulded article according to one of the claims 3 to 6, characterised in that the thermoplastic fibres consist of polypropylene, copolymers and/or bicomponent fibres.

8. A moulded article according to claim 7, characterised in that the fibres have a length of approx. 4 cm.

## Revendications

1. Procédé de fabrication d'un article moulé poreux, isolant à la chaleur et/ou au bruit, qui présente une surface veloutée et une masse volumique de 50 - 200 g/cm³, en particulier de garniture de pièces de voiture émettant du bruit et/ou de la chaleur, au cours duquel une nappe de fibres en fibres naturelles et contenant des fibres thermoplastiques en tant que liant est déposée dans une cavité chauffante d'un moule, la teneur en liant représentant au moins 15%, de préférence 20% en poids et les fibres thermoplastiques étant choisies de telle sorte qu'elles persistent substantiellement lors de la fabrication, donc qu'elles ne fondent pas entièrement, cette forme est obturée hermétiquement au gaz et à la pression, un fluide chaud est amené dans la cavité contenant la nappe de fibres et le liant, ce fluide étant maintenu à une pression élevée de 2 à 20 bars lors de toute la durée de séjour de la nappe et du liant dans la forme, ce fluide étant évacué avant enlèvement de l'article moulé fini hors du moule ouvert et amené à une installation de filtrage.

2. Procédé selon la revendication 1, caractérisé en ce que le fluide employé est de la vapeur d'eau sèche saturée.

3. Article moulé poreux, isolant à la chaleur et/ou au bruit réalisé selon le procédé de la revendication 1.

4. Article selon la revendication 3, caractérisé en ce que celui-ci est un article en une seule couche.

5. Article selon l'une des revendications 3 ou 4, caractérisé en ce qu'au moins une couche décorative ou de protection est apposée sur l'article.

6. Article selon l'une des revendications 3 à 5, caractérisé en ce qu'un mélange de matériaux thermoplastiques et thermodurcissables est présent en tant que liant.

7. Article selon l'une des revendications 3 à 6, caractérisé en ce les fibres thermoplastiques sont constituées de fibres en polypropylène, en copolymère et/ou en fibres bi-composées.

8. Article moulé selon la revendication 7, caractérisé en ce que les fibres présentent une longueur d'environ 4 cm.
